# EUROPÄISCHE PATENTSCHRIFT

(11) **EP 3 479 196 B1**
(45) Veröffentlichungstag und Bekanntmachung des Hinweises auf die Patenterteilung: **02.09.2020**
(21) Anmeldenummer: 17788189.3
(22) Anmeldetag: 17.10.2017
(51) Int. Cl.: G06F 1/26, G06F 1/32

(54) **COMPUTERSYSTEM MIT WENIGSTENS EINER SCHNITTSTELLE UND VERFAHREN**
COMPUTER SYSTEM HAVING AT LEAST ONE INTERFACE, AND METHOD
SYSTÈME INFORMATIQUE À AU MOINS UNE INTERFACE ET PROCÉDÉ

(30) Priorität: 24.10.2016 DE 102016120226
(43) Veröffentlichungstag der Anmeldung: 08.05.2019
(73) Patentinhaber: Fujitsu Technology Solutions Intellectual Property GmbH, 80807 München (DE)
(72) Erfinder: STAUDE, Rainer, 80807 München (DE); MAIER, Andreas, 80807 München (DE); HÄUSSERMANN, Rudolf, 80807 München (DE); FELDE, Waldemar, 80807 München (DE)
(74) Vertreter: Epping - Hermann - Fischer
(86) Internationale Anmeldenummer: PCT/EP2017/076499
(87) Internationale Veröffentlichungsnummer: WO 2018/077674

(56) Entgegenhaltungen:
- US-A1- 2009 063 877
- US-A1- 2015 333 526
- US-A1- 2016 041 606

## Beschreibung

Die vorliegende Erfindung betrifft ein Computersystem mit wenigstens einer Schnittstelle, insbesondere einer USB Typ-C Schnittstelle. Die Erfindung betrifft außerdem ein Verfahren zur Begrenzung einer Leistungsabgabe über wenigstens eine Schnittstelle eines Computersystems, insbesondere eine USB Typ-C Schnittstelle.

Nahezu alle Computersysteme verfügen heute über Schnittstellen, an die Peripheriegeräte angeschlossen werden können. Diese Schnittstellen sind in den meisten Fällen dazu eingerichtet, eine Versorgungsspannung von dem Computersystem an ein Peripheriegerät abzugeben. Im Fall einer USB Typ-C Schnittstelle kann über die Schnittstelle eine Leistung von bis zu 15 Watt abgegeben werden. Gemäß der Power Delivery Spezifikation ist eine Abgabe von bis zu 100 Watt über eine Schnittstelle möglich.

Durch die oben beschriebene Leistungsabgabe kann es zu Leistungsengpässen in einem Computersystem kommen, die zu einem Systemabsturz führen. Dies ist insbesondere der Fall, wenn mehrere Schnittstellen an einem Computersystem angebracht sind und so ein Vielfaches der oben genannten Leistungswerte abgegriffen werden kann. Des Weiteren treten Leistungsengpässe auf, wenn ein Computersystem mit derartigen Schnittstellen ein Netzteil mit einer begrenzten Ausgangsleistung aufweist, wie es zum Beispiel bei sogenannten All-in-One-PCs vorkommt.

Ein möglicher Lösungsansatz besteht darin, bei derartigen Geräten die Leistungsabgabe über die Schnittstellen fest aufeinen bestimmten Wert zu limitieren. Allerdings ist es dann nicht möglich, Peripheriegeräte an den Schnittstellen zu betreiben, die eine höhere Leistung als die limitierte Leistung beanspruchen. Dies ist insbesondere bei elektrischen Geräten störend, deren aufladbare Batterien über einen USB-Anschluss aufgeladen werden. Der Ladevorgang einer aufladbaren Batterie dauert bei einer niedrigen Leistungsabgabe erheblich länger, als bei einer höheren Leistungsabgabe.

Ein anderer möglicher Lösungsansatz besteht darin, Leistungsverbraucher in dem Computersystem zu reduzieren oder einzuschränken. Dies hat für den Nutzer zur Folge, dass entsprechende Eigenschaften des Produkts nicht zur Verfügung stehen oder nur mit einer eingeschränkten Performanz arbeiten können. Ein weiterer Lösungsansatz ist es, größere Netzteile mit ausreichend Leistungsreserven zu verwenden. Dadurch werden höhere Kosten und eine geringere Energieeffizienz verursacht. Außerdem steht in Computersystemen mit begrenztem Volumen meist kein zusätzlicher Platz für ein leistungsstärkeres und somit größeres Netzteil zur Verfügung.

In der US 2013/0320942 A1 wird ein Spannungsregelkreis mit einer anpassungsfähigen Strombegrenzung beschrieben. Der Spannungsregelkreis begrenzt einen durch den Regelkreis fließenden Strom, um eine Eingangsspannung konstant zu halten. Abhängig davon, ob der Spannungsregelkreis hostseitig oder peripheriegerätseitig an einer Schnittstelle angebracht ist, wird entweder ein über die Schnittstelle an ein Peripheriegerät abgegebener Strom begrenzt, oder ein über die Schnittstelle aufgenommener Strom begrenzt, der an das Peripheriegerät abgegeben wird, in dem der Spannungsregelkreis eingebaut ist.

In der US 5,884,086 wird eine Vorrichtung und ein Verfahren beschrieben, um verschiedene Spannungen und Leistungslevel über eine Schnittstelle zwischen einem Host und einem Peripheriegerät zu kommunizieren. Hierbei wird von einem Peripheriegerät eine für das Peripheriegerät benötigte Leistung von dem Host angefordert. Der Host schaltet dann die benötigte Leistung an der entsprechenden Schnittstelle frei.

Aus der US 2009/0063877 A1 ist ein System und ein Verfahren für ein intelligentes Leistungsmanagement für wenigstens eine externe Schnittstelle einer Datenverarbeitungsvorrichtung bekannt. Die Datenverarbeitungsvorrichtung ist dazu eingerichtet, als Host ein oder mehrere externe Geräte über die externe(n) Schnittstelle(n), welche sowohl für einen Datenaustausch als auch zum Bereitstellen einer Leistung zur Verfügung stehen, zu laden oder anderweitig mit Leistung zu versorgen. Eine hostbasierte Leistungsquelle ist vorgesehen, die dazu eingerichtet ist, ein Leistungsmanagement vorzunehmen, wenn die Host-Datenverarbeitungsvorrichtung inaktiv ist. Eine nutzerbasierte Vorgehensweise kann dazu eingerichtet sein, wahlweise eine Leistung über eine oder mehrere Schnittstellen der Datenverarbeitungsvorrichtung basierend auf einem Bedarf eines Nutzers oder basierend auf einem Wunsch eines Nutzers, auf externe Schnittstellenleistung zuzugreifen, bereitzustellen.

Aus der US 2016/0041606 A1 ist ein ein Verfahren bekannt, bei dem nach Erreichen eines Unterspannungssperre (UVLO)-Schwellenwerts ein elektronisches Gerät in einem Low-Power-Modus mit einem niedrigeren UVLO-Schwellenwert neu gestartet wird, so dass das Gerät über den ersten UVLO-Schwellenwert hinaus weiter verwendet werden kann. So kann das Gerät beispielsweise im Hochleistungsmodus eine Reihe von Funktionalitäten eines modernen tragbaren elektronischen Geräts erfüllen, wie z. B. Netzwerkzugriff, die Möglichkeit Anwendungen auszuführen, Bluetooth-Verbindungen usw. In einem Niedrigverbrauchsmodus kann das Gerät beispielsweise nur eine aktuelle Uhrzeit überprüfen und anzeigen, einen Alarmton zu einer vordefinierten Zeit abspielen, Near Field Communication (NFC)-Transaktionen/Zahlungen durchführen. Die eingeschränkte Funktionalität und der reduzierte Einsatz von Peripheriegeräten im Niedrigverbrauchsmodus können verhindern, dass die Batterie Spitzen im Stromverbrauch erfährt, die bei relativ niedrigen Spannungswerten problematisch sein können.
Aufgabe der vorliegenden Erfindung ist es, ein Computersystem mit wenigstens einer Schnittstelle und ein entsprechendes Verfahren für seinen Betrieb zu beschreiben, welches die oben genannten Probleme löst oder mindert.

Gemäß einem ersten Aspekt der Erfindung wird die oben genannte Aufgabe durch ein Computersystem mit wenigstens einer Schnittstelle gelöst. Das Computersystem umfasst des Weiteren wenigstens eine Vorrichtung zur Spannungsüberwachung und wenigstens eine Schnittstellensteuerungsvorrichtung. Die Schnittstellensteuerungsvorrichtung umfasst eine Signalisierungsschaltung und ist dazu eingerichtet, eine Leistungsabgabe über die Schnittstelle auf ein vorbestimmtes Leistungsniveau zu drosseln, wenn die Vorrichtung zur Spannungsüberwachung einen Abfall einer Versorgungsspannung des Computersystems unter einen ersten Grenzwert registriert. Die Signalisierungsschaltung ist dazu eingerichtet, die Drosselung der Leistungsabgabe an ein Peripheriegerät zu signalisieren.

Leistungsenpässe in dem Computersystem werden vermieden, indem die Größe der Versorgungsspannung des Computersystems überwacht wird und die Leistungsabgabe über die Schnittstelle bei einem Abfall der Versorgungsspannung auf ein vorbestimmtes Leistungsniveau gedrosselt wird. Die über die Schnittstelle abgegebene Leistung wird so dynamisch an die in dem Computersystem verfügbare Leistung angepasst. Ein dauerhaftes Begrenzen der abgegebenen Leistung an der Schnittstelle auf ein Minimum, das Einschränken der Leistungsverbraucher in dem Computersystem oder die Verwendung einer höheren Versorgungsspannung, was das Computersystem größer und teurer macht, ist somit nicht erforderlich.

Manche Protokolle, wie zum Beispiel USB Typ-C, gestalten eine Leistungsabgabe an ein Peripheriegerät über eine Schnittstelle, indem von Seiten des Computersystems ein verfügbares Leistungsniveau an das Peripheriegerät signalisiert wird. Daraufhin stellt das Peripheriegerät die von dem Computersystem bezogene Leistung entsprechend der Signalisierung ein. Um die Leistungsabgabe über die Schnittstelle auf ein vorbestimmtes Leistungsniveau zu drosseln, kann in diesem Fall ein dem vorbestimmten Leistungsniveau entsprechendes Signal von dem Computersystem erzeugt werden.

In einer vorteilhaften Ausgestaltung umfasst das Computersystem ferner eine Stromversorgungseinheit, die die Versorgungsspannung des Computersystems bereitstellt. Die Stromversorgungseinheit umfasst beispielsweise ein Netzteil oder eine Batterie.

Zur Implementierung des Computersystems mit wenigstens einer Schnittstelle eignet sich besonders eine Vorrichtung zur Spannungsüberwachung, die bei einem Abfall der Versorgungsspannung unter den ersten Grenzwert in dem Computersystem wenigstens ein erstes Warnsignal zur Drosselung der Leistungsabgabe an die Schnittstellensteuerungsvorrichtung sendet.

In wenigstens einer Ausgestaltung der Erfindung ist die Vorrichtung zur Spannungsüberwachung dazu eingerichtet, ein zweites Warnsignal an eine Notabschaltkomponente des Computersystems zu senden, wenn die Versorgungsspannung unter einen zweiten Grenzwert abfällt. Die Notabschaltkomponente ist dazu eingerichtet, bei Empfangen des zweiten Warnsignals das Computersystem notabzuschalten. Dieses Notabschalten verhindert eine Überlastung des Netzteils, die zu dauerhaften Schäden führen kann. Zu einer solchen Überlastung kann es beispielsweise kommen, wenn die Schnittstellensteuerungsvorrichtung oder andere Komponenten des Computersystems nicht ordnungsgemäß funktionieren. Bei einer Notabschaltung wird das Computersystem beispielsweise hart heruntergefahren, um eine Beschädigung eingebauter Komponenten auszuschließen.

In wenigstens einer Ausgestaltung der Erfindung umfasst die Schnittstelle wenigstens eine Versorgungsleitung und wenigstens eine Signalisierungsleitung. Die Schnittstellensteuerungsvorrichtung ist mit der wenigstens einen Versorgungsleitung und der wenigstens einen Signalisierungsleitung verbunden. Im Falle einer USB Typ-C Schnittstelle entspricht die wenigstens eine Versorgungsleitung der Busspannungsleitung und die wenigstens eine Signalisierungsleitung der CC-Leitung.

Zur Implementierung des Computersystems mit wenigstens einer Schnittstelle ist insbesondere auch wenigstens eine Schnittstelle geeignet, die zur Abgabe unterschiedlicher Leistungen gemäß der Power Delivery Spezifikation eingerichtet ist.

Gemäß einem zweiten Aspekt wird die oben genannte Aufgabe durch ein Verfahren zur Begrenzung einer Leistungsabgabe über wenigstens eine Schnittstelle eines Computersystems, insbesondere eine USB Typ-C Schnittstelle gelöst. Das Verfahren umfasst die folgenden Schritte:
- Überwachen einer Größe einer Versorgungsspannung in dem Computersystem mit wenigstens einer Schnittstelle,
- Drosseln der Leistungsabgabe über die wenigstens eine Schnittstelle auf ein vorbestimmtes Leistungsniveau, wenn ein Abfall der Versorgungsspannung unter einen ersten Grenzwert registriert wird.

Mit diesem Verfahren ist es möglich, die über eine Schnittstelle abgegebene Leistung eines Computersystems dynamisch im Falle eines Leistungsengpasses einzustellen. Eine Überlastung des Computersystems durch ein Abgreifen einer zu großen Leistung über eine Schnittstelle wird von dem Computersystem registriert. Bevor die Überlastung zu einem Systemabsturz führt, begrenzt die Schnittstellensteuerungsvorrichtung die über die Schnittstelle abgegebene Leistung und sichert so das Computersystem gegen die Überlastung ab.

In einer weiteren Ausgestaltung des Verfahrens wird für die Leistungsabgabe eines einer Mehrzahl von unterschiedlichen vorbestimmten Leistungsniveaus ausgewählt. Steht eine Mehrzahl von unterschiedlichen vorbestimmten Leistungsniveaus zur Verfügung, so kann die Leistungsabgabe über die Schnittstelle bei einem Leistungsengpass stufenweise begrenzt werden. Dies hat den Vorteil, dass beispielsweise bei einem geringen Leistungsengpass die abgegebene Leistung nur um einen kleinen Wert eingeschränkt werden kann. Einem angeschlossenen Peripheriegerät wird dann nur eine um einen kleinen Wert verringerte Leistung zur Verfügung gestellt. Wird in dem Computersystem ein starker Leistungsengpass registriert, so kann ein Leistungsniveau ausgewählt werden, welches einer deutlich höheren Einschränkung der Leistung entspricht.

Für eine Implementierung des Verfahrens sind insbesondere unterschiedliche Leistungsniveaus mit einer Leistungsabgabe von 15 Watt, 7,5 Watt und 4,5 Watt vorteilhaft. Diese Leistungsniveaus entsprechen den Leistungsniveaus der USB Typ-C Spezifikation.

Die Mehrzahl unterschiedlicher Leistungsniveaus kann ein Leistungsniveau umfassen, bei dessen Auswahl die Leistungsabgabe vollständig unterbrochen wird.

In einer weiteren Ausgestaltung des Verfahrens umfasst das Verfahren einen Schritt zum Senden eines zweiten Warnsignals, wenn ein Abfall der Versorgungsspannung unter einen zweiten Grenzwert registriert wird und das Computersystem bei Empfangen des zweiten Warnsignals notabschaltet.

In einer weiteren Ausgestaltung des Verfahrens wird die Leistungsabgabe über die Schnittstelle vorübergehend deaktiviert, nachdem das erste Warnsignal von der Schnittstellensteuerung empfangen wurde und bevor das vorbestimmte Leistungsniveau bereitgestellt wird.

In wenigstens einer Ausgestaltung des Verfahrens wird nach dem Registrieren des Abfalls der Versorgungsspannung mit dem Drosseln der Leistungsabgabe für eine Zeit T gewartet. Steigt während dieser Zeit die Versorgungsspannung wieder über den ersten Grenzwert an, so wird die Leistungsabgabe ohne Drosselung fortgesetzt. Dies hat den Vorteil, dass die Leistungsabgabe über die Schnittstelle erst dann gedrosselt wird, wenn die Versorgungsspannung über eine gewisse Zeit hinweg unter dem ersten Grenzwert liegt. Auf diese Weise wird vermieden, dass bereits ein minimaler, vorübergehender Spannungseinbruch in dem Computersystem, der für das Computersystem keine Gefahr darstellt, zu einer Drosselung der Leistungsabgabe führt.

Weitere vorteilhafte Ausgestaltungen der Erfindung sind in den angehängten Patentansprüchen sowie der nachfolgenden Beschreibung von Ausführungsbeispielen beschrieben. Die Ausführungsbeispiele werden anhand der folgenden Figuren beschrieben.
Figur 1 zeigt eine schematische Darstellung eines Computersystems gemäß einer Ausgestaltung der Erfindung, und
Figur 2 zeigt ein Zustandsdiagramm eines Verfahrens zur Begrenzung einer Leistungsabgabe über wenigstens eine Schnittstelle eines Computersystems.

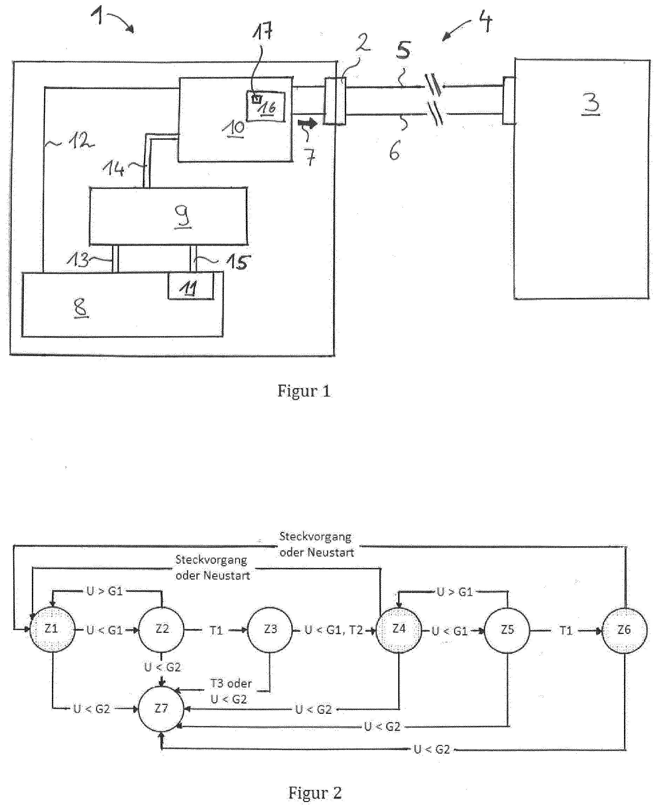

Figur 1 zeigt eine schematische Darstellung eines Computersystems 1 mit einer Schnittstelle 2 gemäß einer Ausgestaltung der Erfindung. An die Schnittstelle 2 des Computersystems 1 ist ein Peripheriegerät 3 über ein Kabel 4 angeschlossen. Das Kabel 4 ist in dem beschriebenen Ausführungsbeispiel ein USB Typ-C Kabel und umfasst unter anderem eine Versorgungsleitung 5 und eine Signalisierungsleitung 6. Im Falle einer USB Typ-C Verbindung wird die Versorgungsleitung 5 als Busspannungsleitung V_{BUS} und die Signalisierungsleitung 6 als CC-Leitung bezeichnet. Weitere Leitungen, die eine USB Typ-C Verbindung aufweist, sind in Figur 1 nicht dargestellt.

Über die Versorgungsleitung 5 stellt das Computersystem 1 dem Peripheriegerät 3 eine Versorgungsspannung zur Verfügung. Damit das Peripheriegerät 3 weiß, wie viel Leistung es von dem Computersystem 1 über die Versorgungsleitung 5 beziehen darf, beaufschlagt das Computersystem 1 die Signalisierungsleitung 6 mit einer entsprechenden, vorbestimmten Steuerspannung 7.

Das Computersystem 1 umfasst des Weiteren ein Netzteil 8, eine Vorrichtung zur Spannungsüberwachung 9 und eine Schnittstellensteuerungsvorrichtung 10. Das Netzteil 8 umfasst in dem Ausführungsbeispiel eine Notabschaltkomponente 11. Die Schnittstellensteuerungsvorrichtung 10 wird von dem Netzteil 8 über eine Spannungszufuhr 12 mit einer Betriebsspannung versorgt. Die Vorrichtung zur Spannungsüberwachung 9 ist mit dem Netzteil 8 über eine Messleitung 13 verbunden. Die Vorrichtung zur Spannungsüberwachung 9 ist mit der Schnittstellensteuerungsvorrichtung 10 über eine erste Signalleitung 14 und mit der Notabschaltkomponente 11 über eine zweite Signalleitung 15 verbunden. Die Schnittstellensteuerungsvorrichtung 10 ist über die Schnittstelle 2 mit der Versorgungsleitung 5 und der Signalisierungsleitung 6 verbunden. Des Weiteren umfasst die Schnittstellensteuerungsvorrichtung 10 in dem beschriebenen Ausführungsbeispiel eine Signalisierungsschaltung 16.

Das Peripheriegerät 3 bezieht eine elektrische Leistung von dem Computersystem 1 über das Kabel 4. Bei einem Einstecken des Kabels 4 an der Schnittstelle 2 oder einem Start des Computersystems 1 wird das Peripheriegerät 3 von dem Computersystem 1 erkannt, und ein ungedrosseltes, erstes Leistungsniveau mit einer maximalen Leistung von beispielsweise 15 Watt wird von der Signalisierungsschaltung 16 durch die Steuerspannung 7 über die Signalisierungsleitung 6 signalisiert. Das Peripheriegerät 3 wertet die Steuerspannung 7 aus und stellt die von dem Computersystem 1 bezogene Leistung auf eine maximale Leistung von 15 Watt, entsprechend dem ungedrosselten, ersten Leistungsniveau ein.

Wird über eine zusätzliche, in Figur 1 nicht eingezeichnete Schnittstelle 2 des Computersystems 1 ebenfalls eine Leistung abgegeben, oder wird das Computersystem 1 mit einer höheren Last betrieben und beansprucht selbst einen höheren Anteil der maximal zur Verfügung stehenden Leistung des Netzteils 8, so kommt es zu einem Leistungsengpass in dem Computersystem 1 und die Versorgungsspannung U des Computersystems 1 fällt ab. Dieses Abfallen registriert die Vorrichtung zur Spannungsüberwachung 9 über die Messleitung 13. Daraufhin sendet die Vorrichtung 9 über die erste Signalleitung 14 ein erstes Warnsignal an die Schnittstellensteuerungsvorrichtung 10.

In diesem Ausführungsbeispiel überwacht die Vorrichtung zur Spannungsüberwachung 9 die Betriebsspannung in dem Computersystem 1. Alternativ kann auch eine Vorrichtung verwendet werden, die einen Abfall der Spannung in dem Computersystem 1 registriert, indem die Vorrichtung einen Strom in dem System oder eine Leistung überwacht.

Bei Erhalt des ersten Warnsignals werden in der Schnittstellensteuerungsvorrichtung 10 Signale zur Drosselung der über die Schnittstelle 2 abgegebenen Leistung generiert. Dazu wird in der Signalisierungsschaltung 16 eine Steuerspannung 7 erzeugt, die über die Schnittstelle 2 an die Signalisierungsleitung 6 angelegt wird. Die Steuerspannung 7 signalisiert dem Peripheriegerät 3 eindeutig ein zweites Leistungsniveau mit einer Leistung von beispielsweise 7,5 Watt. Daraufhin wird von dem Peripheriegerät 3 die über die Schnittstelle 2 bezogene Leistung auf das zweite Leistungsniveau von 7,5 Watt eingestellt. Die Größe der Versorgungsspannung U, die von der Vorrichtung zur Spannungsüberwachung 9 überwacht wird, steigt über den ersten Grenzwert G1, beispielseise einen unteren Grenzwert eines Toleranzbereichs zur Versorgung des Computersystems 1.

Steigt der Verbrauch in dem Computersystems 1 wie oben beschrieben weiter an, kommt es erneut zu einem Abfall der Versorgungsspannung U unter den ersten Grenzwert G1, wenn der Leistungsbedarf eine Nennausgangsleistung des Netzteils 8 übersteigt. Das Drosseln der Leistung erfolgt wie oben beschrieben auf ein drittes Leistungsniveau von beispielsweise 4,5 Watt.

In dem Ausführungsbeispiel entspricht das dritte Leistungsniveau mit einer Leistungsabgabe von 4,5 Watt einem niedrigsten standardkonformen Leistungsniveau. Steigt der Verbrauch in oder an dem Computersystem 1 weiter an, und registriert die Vorrichtung zur Spannungsüberwachung 9 erneut über die Messleitung 13 einen Abfall der Versorgungsspannung U, so sendet die Vorrichtung zur Spannungsüberwachung 9 erneut das erste Warnsignal über die erste Signalleitung 14 an die Schnittstellensteuerungsvorrichtung 10. Daraufhin wird die Leistungsabgabe von dem Computersystem 1 über die Schnittstelle 2 an das Peripheriegerät 3 unterbrochen. Hierzu wird in diesem Ausführungsbeispiel ein elektronischer Schalter 17 an der Signalisierungsschaltung 16 verwendet. Der elektronische Schalter 17 kann sich allerdings auch an einer anderen geeigneten Stelle in dem Computersystem 1 befinden, oder ein alternativer Abschaltemechanismus kann für diesen Zweck implementiert werden.

Wenn die Verbindung zwischen Computersystem 1 und Peripheriegerät 3 gelöst und neu hergestellt wird und das Peripheriegerät 3 von dem Computersystem 1 neu erkannt wird, oder wenn ein Neustart des Computersystems 1 durchgeführt wird, so wird die abgegebene Leistung auf das erste Leistungsniveau von beispielsweise 15 W zurückgesetzt. Ein genauer Ablauf der Drosselung wird weiter unten, unter Bezugnahme auf Figur 2 beschrieben.

Als Signalisierungsschaltung 16 kann zum Beispiel eine Schaltung von Pullup-Widerständen und Transistoren verwendet werden, die eine Hilfsspannung ausgehend von wenigstens einem digitalen Signal auf verschiedene vorbestimmte Steuerspannungen einstellt. Diese Steuerspannungen entsprechen zum Beispiel den Steuerspannungen der USB Typ-C Spezifikation und teilen so dem Peripheriegerät 3 eindeutig die zur Verfügung stehende Leistung über die Signalisierungsleitung 6 mit. Wird beispielsweise eine Hilfsspannung von 5V verwendet, so werden in der Signalisierungsschaltung 16 für die oben beschriebenen Leistungsniveaus folgende Widerstandswerte verwendet:
1. Leistungsniveau (15 W): 10 kΩ
2. Leistungsniveau (7,5 W): 22 kΩ
3. Leistungsniveau (4,5 W): 56 kΩ

Figur 1 zeigt ein Computersystem 1 mit einer Schnittstelle 2, die wie oben beschrieben betrieben wird. Selbstverständlich kann aber auch mehr als eine Schnittstelle 2 an einem Computersystem 1 betrieben werden. In diesem Fall ist es vorteilhaft, den Schnittstellen 2 Prioritäten zuzuweisen und die Drosselung der Leistungsabgabe entsprechend den Prioritäten durchzuführen.

Außerdem sind Implementierungen möglich, die auf eine gesonderte Signalisierungsschaltung 16 verzichten. Über die Schnittstellensteuerungsvorrichtung 10 teilt das Computersystem 1 dem Peripheriegerät 3 die zur Verfügung stehende Leistung mit. In diesem Fall kann auch auf die Signalisierungsleitung 6 verzichtet werden und das Leistungsniveau über eine Nutzkanal-Signalisierung mitgeteilt werden. Eine derartige Lösung ist somit unabhängig von der oben konkret beschriebenen USB Typ-C Spezifikation und kann für andere Schnittstellen, die eine Leistungsabgabe unterstützen, verwendet werden. Insbesondere eignet sich diese Implementierung bei einem Betrieb einer Schnittstelle 2 gemäß der Power Delivery Spezifikation. In diesem Fall eignet sich als Schnittstellensteuerungsvorrichtung 10 insbesondere ein Power Delivery Controller. Alternativ kann die Erfindung auch bei anderen Schnittstellen, über die eine Leistung bereitgestellt wird verwendet werden, wie zum Beispiel Schnittstellen, die Power over Ethernet beispielsweise gemäß der Standards IEEE 802.3af, IEEE 802.3at oder IEEE 802.3bt, oder serielle Schnittstellen, die eine Leistungsabgabe unterstützen.

Figur 2 zeigt ein Zustandsdiagramm eines Verfahrens zur Begrenzung einer Leistungsabgabe über wenigstens eine Schnittstelle eines Computersystems gemäß einer Ausgestaltung der Erfindung.

Zu Beginn, beispielsweise nach einem Anschließen eines Peripheriegeräts 3 an der Schnittstelle 2 des Computersystems 1 gemäß Figur 1 oder einem Start des Computersystems 1 und einem nachfolgenden Erkennen des Peripheriegeräts 3 an der Schnittstelle 2, befindet sich das System 1 in einem Zustand Z1. In diesem Zustand Z1 stellt das Computersystem 1 an der Schnittstelle 2 für das Peripheriegerät 3 eine maximale Leistung entsprechend dem ersten Leistungsniveau von beispielsweise 15 Watt bereit.

Wird bei dem Überwachen der Größe der Versorgungsspannung U durch die Vorrichtung zur Spannungsüberwachung 9 in dem Computersystem 1 ein Abfall der Versorgungsspannung U unter einen ersten Grenzwert G1 registriert, geht das System 1 in einen zweiten Zustand Z2 über. In dem beschriebenen Verfahren gibt das Computersystem 1 über die Schnittstelle 2 weiterhin die maximale Leistung von beispielsweise 15 Watt entsprechend dem ersten Leistungsniveau an das Peripheriegerät 3 ab.

Registriert die Vorrichtung zur Spannungsüberwachung 9, während sich das System in Zustand Z2 befindet, einen Anstieg der Versorgungsspannung U über den ersten Grenzwert G1, so wird das System in den Ausgangszustand Z1 zurückversetzt. Dies verhindert, dass vorübergehende Leistungspeaks oder Glitches eine Drosselung der Leistungsabgabe über die Schnittstelle 2 bedingen. Vorübergehende Leistungspeaks verursachen ein vorübergehendes Einbrechen der Versorgungsspannung U, welches den Betrieb des Computersystems 1 jedoch nicht gefährdet.

Registriert die Vorrichtung zur Spannungsüberwachung 9 über eine gewisse Zeit T1, beispielsweise 5 Millisekunden, hinweg keinen Anstieg der Versorgungsspannung U über den ersten Grenzwert G1, so wird die Leistungsabgabe über die Schnittstelle 2 in einem Zustand Z3 vorübergehend deaktiviert. Dies hat zur Folge, dass die Versorgungsspannung U wieder über den ersten Grenzwert G1 ansteigt. Wird dieser Anstieg der Versorgungsspannung U von der Vorrichtung zur Spannungsüberwachung 9 während einer Zeit T2, beispielsweise 3 Sekunden, registriert, so geht das System in einen Zustand Z4 über. In diesem Ausführungsbeispiel wird die Leistungsabgabe über die Schnittstelle 2 in Zustand Z3 vorübergehend deaktiviert, um ausreichend Zeit für eine Kommunikation des Computersystems 1 mit dem Peripheriegerät 3 über die bevorstehende Drosselung der Leistungsabgabe zu gewährleisten.

Eine alternative Implementierung der Erfindung ist ohne eine vorübergehende Deaktivierung der Leistungsabgabe über die Schnittstelle 2 möglich. Der Zustand Z3 ist somit optional. Das System kann von Zustand Z2 direkt in Zustand Z4 übergehen, wenn während der Zeit T1 kein automatischer Anstieg der Spannung U über den ersten Grenzwert G1 registriert wird.

In Zustand Z4 gibt das Computersystem 1 über die Schnittstelle 2 eine gedrosselte Leistung entsprechend einem zweiten Leistungsniveau von beispielsweise 7,5 Watt ab. Steigt der Verbrauch an dem Computersystem 1 weiter an, so fällt die Versorgungsspannung U erneut unter den ersten Grenzwert G1 ab. Dieser Abfall wird wieder von der Vorrichtung zur Spannungsüberwachung 9 registriert. Das System geht in einen Zustand Z5 über. In diesem Zustand wird wie bei Zustand Z2 für eine gewisse Zeit T1 gewartet, ob die Versorgungsspannung U wieder über den ersten Grenzwert G1 ansteigt. Ist dies der Fall, so wird das System in den Zustand Z4 mit einer gedrosselten Leistungsabgabe von 7,5 Watt zurückversetzt. Wird dieser Anstieg der Versorgungsspannung U über den ersten Grenzwert G1 in Zustand Z5 über die Zeit T1 hinweg nicht registriert, so wird die Leistungsabgabe über die Schnittstelle 2 in einem Zustand Z6 unterbrochen.

In dem in Figur 2 beschriebenen Zustandsdiagramm entfällt das dritte Leistungsniveau aus Figur 1. Das Verfahren aus Figur 2 kann jedoch auch mit drei oder mehr unterschiedlichen Leistungsniveaus durchgeführt werden, bis ein niedrigstes Leistungsniveau, bei dem eine Leistung von dem Computersystem 1 an das Peripheriegerät 3 abgegeben wird erreicht ist, und bei einem erneuten Abfall der Versorgungsspannung U die Leistungsabgabe unterbrochen wird.

Die Zustände Z1 und Z4 sind statische Zustände, in denen das Computersystem über die Schnittstelle 2 dauerhaft eine Versorgungsspannung bereitstellt, so lange kein Abfall der Versorgungsspannung U registriert wird. Z6 ist ebenfalls ein statischer Zustand, in dem die Leistungsabgabe über die Schnittstelle 2 unterbrochen ist. Ein Zurücksetzen der statischen Zustände Z4 und Z6 mit einer abgesenkten bzw. unterbrochenen Leistungsabgabe auf den statischen Zustand Z1 mit einer ungedrosselten Leistungsabgabe ist über ein Trennen der Verbindung und ein neues Einstecken des Peripheriegeräts 3 oder einen Neustart des Computersystems 1 möglich.

Registriert die Vorrichtung zur Spannungsüberwachung 9 in dem Zustand Z3 über eine Zeit T3, beispielsweise 10 Millisekunden, hinweg keinen Anstieg der Versorgungsspannung U über den ersten Grenzwert G1, obwohl die Leistungsabgabe über die Schnittstelle 2 vorübergehend deaktiviert ist, so geht das System in einen Zustand Z7 über. T3 entspricht somit einem Bruchteil der Zeit T2. In dem Zustand Z3 ist die Leistungsabgabe vorübergehend, für 3 Sekunden deaktiviert. Wird innerhalb von 10 Millisekunden während dieser Deaktivierung kein Anstieg der Spannung U über den Grenzwert G1 registriert, so geht das System in den Zustand Z7 über, wird aber ein Ansteigen der Spannung U über den Grenzwert G1 registriert, so geht das System nach Ablauf der 3 Sekunden in den Zustand Z4 über. In dem Zustand Z7 wird das Computersystem 1 von einer Notabschaltkomponente 11 notabgeschaltet, um eine Überlastung des Netzteils 8 des Computersystems 1 auszuschließen.

Die Zustände Z2, Z3 und Z5 sind nichtstatische Zustände, die jeweils nur für die vorbestimmten Zeiten T1, beziehungsweise T2 respektive T3 eingenommen werden. In diesem Ausführungsbeispiel sind für die Zeiten T1, T2 und T3 die folgenden Werte gewählt. Andere geeignete Werte sind selbstverständlich möglich.
T1 = 5 Millisekunden
T2 = 3 Sekunden
T3 = 10 Millisekunden

Von jedem der Zustände Z1 bis Z6 geht das System in den Zustand Z7 über und wird somit notabgeschaltet, wenn die Vorrichtung zur Spannungsüberwachung 9 einen Abfall der Versorgungsspannung U unter einen zweiten Grenzwert G2 registriert.

### Bezugszeichenliste

- 1: Computersystem
- 2: Schnittstelle
- 3: Peripheriegerät
- 4: Kabel
- 5: Versorgungsleitung
- 6: Signalisierungsleitung
- 7: Steuerspannung
- 8: Netzteil
- 9: Vorrichtung zur Spannungsüberwachung
- 10: Schnittstellensteuerungsvorrichtung
- 11: Notabschaltkomponente
- 12: Spannungszufuhr
- 13: Messleitung
- 14: erste Signalleitung
- 15: zweite Signalleitung
- 16: Signalisierungsschaltung
- 17: elektronischer Schalter

- U: Versorgungsspannung
- G1: erster Grenzwert
- G2: zweiter Grenzwert

## Patentansprüche

1. Computersystem (1) mit wenigstens einer Schnittstelle (2), insbesondere wenigstens einer USB Typ-C Schnittstelle, umfassend
- wenigstens eine Vorrichtung zur Spannungsüberwachung (9), und
- wenigstens eine Schnittstellensteuerungsvorrichtung (10) umfassend eine Signalisierungsschaltung (16),
wobei die Schnittstellensteuerungsvorrichtung (10) dazu eingerichtet ist, eine Leistungsabgabe über die Schnittstelle (2) auf ein vorbestimmtes Leistungsniveau zu drosseln, wenn die Vorrichtung zur Spannungsüberwachung (9) einen Abfall einer Versorgungsspannung (U) des Computersystems (1) unter einen ersten Grenzwert (G1) registriert, und die Signalisierungsschaltung (16) dazu eingerichtet ist, die Drosselung der Leistungsabgabe an ein Peripheriegerät (3) zu signalisieren.

2. Computersystem (1) mit wenigstens einer Schnittstelle (2) nach Anspruch 1, ferner umfassend eine Stromversorgungseinheit, wobei die Versorgungsspannung (U) des Computersystems (1) von der Stromversorgungseinheit bereitgestellt wird.

3. Computersystem (1) mit wenigstens einer Schnittstelle (2) nach einem der Ansprüche 1 oder 2, wobei die Stromversorgungseinheit ein Netzteil (8) umfasst.

4. Computersystem (1) mit wenigstens einer Schnittstelle (2) nach einem der Ansprüche 1 bis 3, wobei die Vorrichtung zur Spannungsüberwachung (9) dazu eingerichtet ist, bei einem Abfall der Versorgungsspannung (U) unter den ersten Grenzwert (G1) in dem Computersystem (1) wenigstens ein erstes Warnsignal zur Drosselung der Leistungsabgabe an die Schnittstellensteuerungsvorrichtung (10) zu senden.

5. Computersystem (1) mit wenigstens einer Schnittstelle (2) nach einem der Ansprüche 1 bis 4, wobei die Vorrichtung zur Spannungsüberwachung (9) dazu eingerichtet ist, ein zweites Warnsignal an eine Notabschaltkomponente (11) des Computersystems (1) zu senden, wenn die Versorgungsspannung (U) unter einen zweiten Grenzwert (G2) abfällt und die Notabschaltkomponente (11) dazu eingerichtet ist, bei Empfangen des zweiten Warnsignals das Computersystem (1) notabzuschalten.

6. Computersystem (1) mit wenigstens einer Schnittstelle (2) nach einem der Ansprüche 1 bis 5, wobei die Schnittstelle (2) wenigstens eine Versorgungsleitung (5) und wenigstens eine Signalisierungsleitung (6) umfasst, und die Schnittstellensteuerungsvorrichtung (10) mit der wenigstens einen Versorgungsleitung (5) und der wenigstens einen Signalisierungsleitung (6) verbunden ist.

7. Computersystem (1) mit wenigstens einer Schnittstelle (2) nach einem der Ansprüche 1 bis 6, wobei die Schnittstelle (2) zur Abgabe unterschiedlicher Leistungen gemäß der Power Delivery Spezifikation eingerichtet ist.

8. Verfahren zur Begrenzung einer Leistungsabgabe über wenigstens eine Schnittstelle (2) eines Computersystems (1), insbesondere eine USB Typ-C Schnittstelle, umfassend:
- Überwachen einer Größe einer Versorgungsspannung (U) in dem Computersystem (1),
- Drosseln der Leistungsabgabe über die wenigstens eine Schnittstelle (2) auf ein vorbestimmtes Leistungsniveau, wenn ein Abfall der Versorgungsspannung (U) unter einen ersten Grenzwert (G1) registriert wird, wobei einem an der wenigstens einen Schnittstelle (2) angeschlossenen Peripheriegerät (3) die Drosselung der Leistungsabgabe durch eine Signalisierungsschaltung (16) signalisiert wird.

9. Verfahren nach Anspruch 8, wobei für die Leistungsabgabe eines einer Mehrzahl von unterschiedlichen vorbestimmten Leistungsniveaus ausgewählt wird.

10. Verfahren nach Anspruch 9, wobei die Mehrzahl der unterschiedlichen Leistungsniveaus eine Leistungsabgabe von 15 Watt, 7,5 Watt und 4,5 Watt umfassen.

11. Verfahren nach einem der Ansprüche 9 oder 10, wobei die Mehrzahl der unterschiedlichen Leistungsniveaus ein Leistungsniveau umfasst, bei dessen Auswahl die Leistungsabgabe unterbrochen wird.

12. Verfahren nach einem der Ansprüche 8 bis 11, wobei ein zweites Warnsignal gesendet wird, wenn ein Abfall der Versorgungsspannung (U) unter einen zweiten Grenzwert (G2) registriert wird und das Computersystem (1) bei Empfangen des zweiten Warnsignals notabschaltet.

13. Verfahren nach einem der Ansprüche 8 bis 12, wobei die Leistungsabgabe über die Schnittstelle (2) vorübergehend deaktiviert wird, nachdem das erste Warnsignal von der Schnittstellensteuerungsvorrichtung (10) empfangen wurde und bevor das vorbestimmte Leistungsniveau bereitgestellt wird.

14. Verfahren nach einem der Ansprüche 8 bis 13, wobei nach dem Registrieren des Abfalls der Versorgungsspannung (U) mit dem Drosseln der Leistungsabgabe für eine Zeit T gewartet wird, ob die Versorgungsspannung (U) wieder über den ersten Grenzwert (G1) ansteigt und in diesem Fall die Leistungsabgabe ohne Drosselung fortgesetzt wird.

15. Verfahren nach einem der Ansprüche 8 bis 14, umfassend ein Umschalten von dem vorbestimmten Leistungsniveau auf eine ungedrosselte Leistungsabgabe, wenn ein Verbinden des Peripheriegeräts (3) mit der Schnittstelle (2) oder ein Neustart des Computersystems (1) erkannt wird.

## Claims

1. Computer system (1) with at least one interface (2), in particular at least one USB Type-C interface, including
- at least one voltage monitoring device (9), and
- at least one interface control device (10) including a signaling circuit (16),
wherein the interface control device (10) is configured to restrict a power output via the interface (2) to a predetermined power level if the voltage monitoring device (9) detects a drop of a supply voltage (U) of the computer system (1) below a first threshold value (G1), and the signaling circuit (16) is configured to signalize the restriction of the power output to a peripheral device (3).

2. Computer system (1) with at least one interface (2) according to claim 1, further including a power supply unit, wherein the supply voltage (U) of the computer system (1) is provided by the power supply unit.

3. Computer system (1) with at least one interface (2) according to any of claims 1 or 2, wherein the power supply unit comprises a power adapter (8).

4. Computer system (1) with at least one interface according to any of claims 1 to 3, wherein the voltage monitoring device (9) is configured, in a drop of the supply voltage (U) below the first threshold value (G1) in the computer system (1), to send at least one first warning signal for restricting the power output to the interface control device (10).

5. Computer system (1) with at least one interface (2) according to any of claims 1 to 4, wherein the voltage monitoring device (9) is configured to send a second warning signal to an emergency shutdown component (11) of the computer system (1), if the supply voltage (U) drops below a second threshold value (G2) and the emergency shutdown component (11) is configured to perform an emergency shutdown of the computer system (1) upon receiving the second warning signal.

6. Computer system (1) with at least one interface (2) according to any of claims 1 to 5, wherein the interface (2) includes at least one supply line (5) and at least one signaling line (6), and the interface control device (10) is connected to the at least one supply line (5) and the at least one signaling line (6).

7. Computer system (1) with at least one interface (2) according to any of claims 1 to 6, wherein the interface (2) is configured for different power outputs in accordance with the Power Delivery Specification.

8. Method for restricting the power output via at least one interface (2) of a computer system (1), in particular a USB Type-C interface, comprising:
- monitoring a magnitude of a supply voltage (U) in the computer system (1),
- restricting the power output via the at least one interface (2) to a predetermined power level, if a drop of the supply voltage (U) below a first threshold value (G1) is detected, wherein the restriction of the power output is signaled to a peripheral device (3), connected to the at least one interface (2), by means of a signaling circuit (16).

9. Method according to claim 8, wherein one of a plurality of different, predetermined power levels is selected for the power output.

10. Method according to claim 9, wherein the plurality of the different power levels include a power output of 15 W, 7.5 W and 4.5 W.

11. Method according to any of claims 9 or 10, wherein the plurality of different power levels include a power level, the selection of which interrupts the power output.

12. Method according to any of claims 8 to 11, wherein a second warning signal is sent if a drop of the supply voltage (U) below a second threshold (G2) is detected, and the computer system (1), upon receiving the second warning signal, is emergency shut-off.

13. Method according to any of claims 8 to 12, wherein the power output via the interface (2) is temporarily deactivated after the first warning signal has been received by the interface control device (10) and before the predetermined power level is provided.

14. Method according to any of claims 8 to 13, wherein after detecting the drop of the supply voltage (U), restriction of the supply voltage is delayed by a time T to check whether the supply voltage rises again above the first threshold value (G1) and, in this case, the power output continues without restriction.

15. Method according to any of claims 8 to 14, including the switching from the predetermined power level to a non-restricted power output, if a connecting of the peripheral device (3) to the interface (2), or a restart of the computer system (1) is detected.

## Revendications

1. Système informatique (1) à au moins une interface (2), en particulier au moins une interface USB de type C, comprenant
- au moins un dispositif de surveillance de tension (9), et
- au moins un dispositif de commande d'interface (10) comprenant un circuit de signalisation (16), sachant que le dispositif de commande d'interface (10) est configuré pour réduire une puissance délivrée via l'interface (2) à un niveau de puissance prédéterminé lorsque le dispositif de surveillance de tension (9) enregistre une chute d'une tension d'alimentation (U) du système informatique (1) sous une première valeur seuil (G1), et le circuit de signalisation (16) est configuré pour signaler la réduction de la puissance délivrée à un appareil périphérique (3).

2. Système informatique (1) à au moins une interface (2) selon la revendication 1, comprenant en outre une unité d'alimentation en courant, sachant que la tension d'alimentation (U) du système informatique (1) est mise à disposition par l'unité d'alimentation en courant.

3. Système informatique (1) à au moins une interface (2) selon l'une des revendications 1 ou 2, sachant que l'unité d'alimentation en courant comprend un bloc d'alimentation secteur (8).

4. Système informatique (1) à au moins une interface (2) selon l'une des revendications 1 à 3, sachant que le dispositif de surveillance de tension (9) est configuré pour, en cas de chute de la tension d'alimentation (U) sous la première valeur seuil (G1) dans le système informatique (1), envoyer au dispositif de commande d'interface (10) au moins un premier signal d'avertissement pour réduire la puissance délivrée.

5. Système informatique (1) à au moins une interface (2) selon l'une des revendications 1 à 4, sachant que le dispositif de surveillance de tension (9) est configuré pour envoyer un deuxième signal d'avertissement à un composant de coupure d'urgence (11) du système informatique (1) lorsque la tension d'alimentation (U) chute sous une deuxième valeur seuil (G2) et le composant de coupure d'urgence (11) est configuré pour couper d'urgence le système informatique (1) en cas de réception du deuxième signal d'avertissement.

6. Système informatique (1) à au moins une interface (2) selon l'une des revendications 1 à 5, sachant que l'interface (2) comprend au moins une ligne d'alimentation (5) et au moins une ligne de signalisation (6), et le dispositif de commande d'interface (10) est relié à l'au moins une ligne d'alimentation (5) et à l'au moins une ligne de signalisation (6) .

7. Système informatique (1) à au moins une interface (2) selon l'une des revendications 1 à 6, sachant que l'interface (2) est configurée pour délivrer des puissances différentes conformément à la spécification relative à la puissance délivrée.

8. Procédé de limitation d'une puissance délivrée via au moins une interface (2) d'un système informatique (1), en particulier une interface USB de type C, comprenant :
- la surveillance d'une grandeur d'une tension d'alimentation (U) dans le système informatique (1),
- la réduction de la puissance délivrée via l'au moins une interface (2) à un niveau de puissance prédéterminé lorsqu'une chute de la tension d'alimentation (U) sous une première valeur seuil (G1) est enregistrée, sachant que la réduction de la puissance délivrée est signalée par un circuit de signalisation (16) à un appareil périphérique (3) raccordé via l'au moins une interface (2) .

9. Procédé selon la revendication 8, sachant que pour la puissance délivrée, l'un d'une pluralité de différents niveaux de puissance prédéterminés est sélectionné.

10. Procédé selon la revendication 9, sachant que la pluralité des différents niveaux de puissance comprend une puissance délivrée de 15 watts, 7,5 watts et 4,5 watts.

11. Procédé selon l'une des revendications 9 ou 10, sachant que la pluralité des différents niveaux de puissance comprend un niveau de puissance lors de la sélection duquel la puissance délivrée est interrompue.

12. Procédé selon l'une des revendications 8 à 11, sachant qu'un deuxième signal d'avertissement est envoyé lorsqu'une chute de la tension d'alimentation (U) sous une deuxième valeur seuil (G2) est enregistrée et le système informatique (1) est coupé d'urgence lors de la réception du deuxième signal d'avertissement.

13. Procédé selon l'une des revendications 8 à 12, sachant que la puissance délivrée via l'interface (2) est temporairement désactivée après que le premier signal d'avertissement a été reçu par le dispositif de commande d'interface (10) et avant que le niveau de puissance prédéterminé ait été mis à disposition.

14. Procédé selon l'une des revendications 8 à 13, sachant qu'après l'enregistrement de la chute de la tension d'alimentation (U), on attend, pour réduire la puissance délivrée, de voir si la tension d'alimentation (U) remonte au-dessus de la première valeur seuil (G1) et, dans ce cas, la puissance continue d'être délivrée sans réduction.

15. Procédé selon l'une des revendications 8 à 14, comprenant une commutation du niveau de puissance prédéterminé à une puissance délivrée non réduite lorsqu'une connexion de l'appareil périphérique (3) avec l'interface (2) ou un redémarrage du système informatique (1) est détecté.
